# EUROPÄISCHE PATENTSCHRIFT

(11) **EP 2 849 139 B1**
(45) Veröffentlichungstag und Bekanntmachung des Hinweises auf die Patenterteilung: **20.09.2017**
(21) Anmeldenummer: 14181398.0
(22) Anmeldetag: 19.08.2014
(51) Int. Cl.: G06Q 30/02, B65D 25/20, B65D 1/24

(54) **Verfahren zur Lieferung und Rückführung von Flaschenkästen sowie hierfür gerüstete Flaschenkästen**
Method for delivery and return of bottle crates and bottle crates equipped for the method
Procédé destiné à la livraison et au retour de caisses de bouteilles et caisses de bouteilles équipées à cet effet

(30) Priorität: 23.08.2013 DE 102013014197
(43) Veröffentlichungstag der Anmeldung: 18.03.2015
(73) Patentinhaber: Schoeller Allibert GmbH, 19057 Schwerin (DE)
(72) Erfinder: Kellerer, Richard, 85622 Feldkirchen (DE)
(74) Vertreter: Bockhorni & Kollegen

(56) Entgegenhaltungen:
- EP-A1- 0 013 057
- WO-A1-01/00493
- AT-B- 357 099
- BE-A3- 1 009 580
- DE-A1- 3 121 084
- DE-A1-102004 063 348
- DE-U1- 29 803 159
- FR-A1- 2 491 035

## Beschreibung

Die Erfindung betrifft einen Flaschenkasten gemäß dem Oberbegriff des Anspruches 1 sowie ein Verfahren gemäß dem Oberbegriff des Anspruches 9.

Der Markt des Getränkebetriebs ist weit gespannt und umfasst Wässer, Fruchtsaftgetränke, Mixgetränke, Biere, Spezialbiere sowie weitere Getränke diverser Art, wie etwa Sport- und Energiegetränke, insbesondere auch Getränke mit Trendcharakter, die ähnlich Modeströmungen häufig wechseln und teilweise nur saisonal oder in einer begrenzten Zeitspanne auf den Markt gebracht werden. Der Getränkesektor stellt einen erheblichen Industriezweig dar, in welchem alleine in Europa pro Jahr mehrere Milliarden von Getränkeflaschen umgesetzt, bewegt und transportiert werden. Der Markt steht somit unter erheblichem Wettbewerbsdruck, unter den vor allem die Getränkehersteller gesetzt sind. Deswegen werden von den Getränkeherstellern zunehmend saisonal bestimmte Getränke beworben und auf dem Markt platziert, die nur über einen Zeitraum von einigen Wochen oder Monaten auf dem Markt gebracht und über Zeitschriften, Rundfunk, Fernsehen und dergleichen entsprechend beworben werden. Dies ist häufig jahreszeitlich bedingt oder bei sportlichen Großereignissen der Fall, wie olympische Spiele, Fußballweltmeisterschaften und dergleichen, was die Getränkeindustrie nutzt um entsprechend ausgerichtete Getränke anzubieten.

Diese saisonalen oder kurzzeitigen Verkäufe, auch Aktionsverkäufe genannt, gewinnen mehr und mehr an Bedeutung für die Getränkehersteller, was aber logistische Probleme aufwirft. Die Getränkehersteller bzw. Brauereien zeichnen sich auf dem Markt maßgeblich durch die besondere Gestaltung ihrer Getränkekästen aus, die vom Design, der Farbe und der Materialwahl entsprechend den Vorstellungen der Getränkehersteller speziell gestaltet sind, um einerseits praktischen Bedürfnissen gerecht zu werden, insbesondere aber auch dem Geschmack des Marktes bzw. der Kunden zu entsprechen. Im Falle von Aktionsware erfordert dies, dass zusätzlich zu den Standardkästen auch Kästen bereitgestellt werden, die entsprechend der Aktionsverkäufe mit den erforderlichen Angaben über das Getränk wie auch entsprechender Werbung gestaltet sind, was in der Regel durch Bedruckung der Außenfläche der Seitenwände der Kästen erfolgt. Wenn also eine Brauerei beispielsweise für den Monat Mai eine Aktion mit "Maibock-Bieren" startet, die sich durch eine spezielle Brauweise und einen erhöhten Alkoholgehalt auszeichnen, bedarf es einer entsprechenden Anzahl von Flaschenkästen, die in Bezug auf das beworbene Produkt "Maibock-Bier" gestaltet und konzipiert sind. Gleiches trifft beispielsweise für Oktoberfestbiere zu, was es mit sich bringt, dass erhebliche Mengen an Flaschenkästen, die für diese Saisonalverkäufe bestimmt sind, zusätzlich auf Lager gehalten werden müssen. Dies ist enorm teuer und wirkt sich zwangsweise entsprechend auf den Preis der Produkte aus und führt letztendlich auch dazu, dass die Häufigkeit der Aktionsverkäufe begrenzt ist, obgleich speziell derartige Aktionsverkäufe zu einer nicht unerheblichen Absatzförderung beitragen können.

Um dem Erfordernis nach derartigen sogenannten Saisonal- bzw. Aktionsverkäufen gerecht werden zu können, greift man teilweise auf eine komplette Neuetiketierung von Kästen zurück, indem man speziell für den Aktionsverkauf gedruckte Etiketten auf die bereits bedruckten Kästen aufbrinngen. Diese Vorgehensweise hat den Nachteil, dass die mit einem entsprechenden Kleber auf bereits vorhandene Label eines Flaschenkastens aufgeklebten Etiketten nach dem Aktionsverkauf sehr schwer zu entfernen sind, was zur Zerstörung der ursprünglichen Bedruckung oder der ursprünglichen Etikettierung führen kann. Auch einer stets weitergehenden Neuetikettierung sind Grenzen gesetzt, da ein häufiger Etikettenschichtaufbau das spätere Ablösen erschwert. Zwar sind generell zwischenzeitlich bereits sogenannte Adhäsionsetiketten bekannt, insbesondere in Form von Etikettenfolien, die ohne Einsatz eines Klebstoffs am Kasten haften können und zwar alleine aufgrund elektrostatischer Halterung. Diese Etikettierung hat sich aber deswegen bis dato nicht durchsetzen können, weil diese Befestigungstechnik häufig ein selbsttätiges Lösen der Etiketten bzw. der Etikettenfolien zur Folge hat, was wiederum mit Blickpunkt auf die Darstellung des Getränkeherstellers im Wege des Aktionsverkaufs sehr nachteilhaft ist. Die Neu- bzw. Umetikettierung ist im Übrigen auch mit einem Aufwand verbunden, weil zum einen die Etiketten in der Größe auf die bereits auf den Kasten vorhandenen Etiketten abgestimmt werden müssen, um diese zu überdecken und ferner bei der Umrüstung der Kästen in die Aktionskästen darauf zu achten ist, dass die Etiketten exakt richtig auf die Kästen aufgeklebt werden, so dass bereits vorhandene Etiketten auch voll überdeckt und nicht Randbereiche der ursprünglichen Etiketten zum Vorschein kommen, was das Erscheinungsbild der für die Aktionsverkäufe verwendeten Kästen entsprechend herabsetzen würde. Zudem bedarf es für die automatische Beseitigung derartiger Etiketten für saisonale Verkäufe in der Regel auch noch entsprechender zusätzlicher Anlagen, um die alten Etiketten zu entfernen und eine einwandfreie Umetikettierung vornehmen zu können. Insgesamt führt dies zu einem für Aktionsverkäufe in der Regel nicht akzeptablen Aufwand, so dass auf derartige Sonderbestückungen von Kästen in der Regel verzichtet wird.

Zum Stand der Technik kann beispielshalber auf die EP 0 013 057 A1 verwiesen werden, die einen einheitlichen Grundkasten betrifft, der mit unterschiedlicher Etikettierung für verschiedene Getränkehersteller verwendet werden kann. Hierbei wird ein standardisierter Grundkasten bereitgestellt, der je nach Getränkehersteller mit einem eigenen Label bestückt werden kann.

Die DE 10 2004 063348 A1 beschreibt ein Verfahren und eine Vorrichtung zur Individualisierung von Getränkekästen unter Verwendung ebenfalls eines neutralen Grundkastens, der an zumindest zwei gegenüberliegenden Flächen über Versiegelungsköpfe mit aufgesiegelten Etiketten in Form von Folien versehen wird. Diese werden aufgrund Heißversiegelung über einen Schmelzverbund mit dem Grundkasten verbunden, der neutral gehalten ist und sind nur thermisch abnehmbar. Sowohl die Verfahrensweise wie auch die Vorrichtung selbst sind umständlich, aufwendig und kompliziert, so dass sich dieser Lösungsgedanke in der Praxis nicht durchgesetzt hat.

Die DE 298 03 159 U1 betrifft die Ausbildung eines Etiketts für beispielsweise Flaschenkästen mit einer lösbaren Aufbringung des Etiketts mittels eines speziell gerüsteten Klebstoffs.

Die BE 1 009 580 A3 befasst sich generell mit der Etikettierung von Flaschenkästen, was allgemein bekannt ist, wozu auch auf die DE 31 21 084 A1 verwiesen werden kann.

Aufgabe der Erfindung ist es, dieser Thematik gerecht zu werden und eine Vorrichtung und ein Verfahren zu schaffen, welches in einfacher und kostengünstiger Weise derartige Saisonalverkäufe bzw. Aktionsverkäufe ermöglicht, wobei nach einem weiteren Aspekt der Erfindung entsprechende Kästen bereitgestellt werden sollen, die sich insbesondere für derartige Aktionsverkäufe eignen.

Diese Aufgabe wird erfindungsgemäß für einen Flaschenkasten durch die Maßnahmen des kennzeichnenden Teils des Anspruches 1 und für ein Verfahren durch die Maßnahmen des Anspruches 9 gelöst.

Zweckmäßige und bevorzugte Weiterbildungen der Erfindungen im Bezug auf das Verfahren und die hierfür geeigneten Flaschenkästen sind durch die Merkmale in den entsprechenden Unteransprüchen gekennzeichnet.

Nach Maßgabe der Erfindung wird ein Poolsystem geschaffen, welches derartige Aktionsverkäufe erleichtert und vereinfacht, indem technische Maßnahmen bereitgestellt werden, welche in einfacher Weise die Durchführung von Aktionsverkäufen erleichtern und begünstigen. Bis dato erfolgt üblicherweise die Belieferung des Kunden über Verkaufsstätten, wie etwa Supermärkte, Getränkelager oder den Einzelhandel, wobei diese Verkaufsstätten wiederum in der Regel von Großhändlern mit den Produkten d. h. mit entsprechenden Getränken bestückten Flaschenkästen beliefert werden. Der Großhändler wiederum holt sich die Produkte unmittelbar von verschiedenen Brauereien. Auch die Rückführung erfolgt in der Regel von den Verkaufsstätten zum Großhändler, der das Leergut sammelt, reinigt, entsprechend der Brauereien sortiert und diese dann als Leergut mit den Leerflaschen wieder zu den speziellen Getränkeherstellern bzw. Brauereien führt, welche dann nach entsprechender Getränkeabfüllung die Flaschenkästen wieder in den Kreislauf einspeisen, um die Kunden über die Verkaufstätten beliefern zu können.

Nach Maßgabe der Erfindung wird in dieses System aus einem Verbund von Getränkeherstellern, Großhändlern und Verkaufsstätten eine oder mehrere Poolstationen integriert, welche vorzugsweise alleine für derartige Aktionsverkäufe gerüstet sind. Diese stellen hierbei einen einheitlichen Grundkasten für Aktionsverkäufe zur Verfügung, der als Standardkasten für verschiedene Getränkehersteller verwendet werden kann, jedoch eine spezifische und individuelle Ausrichtung an die Wünsche und die Werbung des Getränkeherstellers ermöglicht. Dies wird dadurch erreicht, indem die in der Poolstation für die Aktionsverkäufe bereitgestellten Standardkästen mit einer entsprechenden Außenhaut gerüstet werden, die als Werbeträgerfläche geeignet ist und auf der der Hersteller spezifische Angaben, wie etwa Werbehinweise, Produktbezeichnungen, Qualitätsbezeichnungen, Anpreisungen und dergleichen mehr aufbringen kann, wie sie typischerweise für Aktionsverkäufe benötigt werden. Die Poolstation speist dann für den Aktionsverkauf die entsprechend gerüsteten Kästen in das klassische Liefer- und Rückführsystem ein, indem die gerüsteten Aktionsflaschenkästen, im Folgenden Aktionskästen genannt, an den entsprechenden Getränkehersteller geliefert, dort mit den entsprechenden Aktionsgetränken befüllt und dann dem Großhändler und/oder den Verkaufsstätten zugeführt werden, wobei auch die Rückführung der Leerkästen entsprechenden von den Verkaufsstätten zur Brauerei bzw. zum Getränkehersteller, ggf. unter Zwischenschaltung von Großhändlern, erfolgt.

Nach Stopp des Aktionsverkaufsverkaufs werden die Aktionskästen dann der Poolstation zugeführt, was auch im Falle beschädigter Kästen erfolgt. In der Poolstation wird dann die Außenhaut beseitigt und können die Kästen auch gereinigt werden, so dass der einheitliche Grundkasten wieder bereit für einen anderen Aktionsverkauf ist. Dadurch können die Lagerhaltungskosten bei den einzelnen Getränkeherstellern entsprechend stark reduziert werden und es erhöht sich die Bereitschaft zu Aktionsverkäufen, da preiswerte Kästen für die Aktionsverkäufe zur Verfügung stehen, die ohne Weiteres in die bestehenden Systeme eingespeist werden können. Hierbei besteht ein weiterer Vorteil darin, dass diese Grundkästen außerordentlich schlicht und einfach aufgebaut sein können, da sich das Design für den einzelnen Getränkehersteller im äußeren Erscheinungsbild maßgeblich durch die aufgebrachte Außenhaut darstellt. Die Grundkästen weisen bevorzugt im Wesentlichen durchgehend glatte, d.h. stufen-, kanten- und rippenfreie Wandflächen auf, so dass auch die Herstellung in Spritzgießformen entsprechend einfach ist. Auch die Wandstärken können gegenüber normalen Kästen reduziert gehalten, das heißt dünner ausgeführt werden mit Dicken im Bereich von zwei bis drei Millimeter, da die Einsatzzeiten derartiger Aktionskästen in der Regel auf nur einige wenige Monate begrenzt sind, diese also in der Regel nicht permanenten Dauerbelastungen ausgesetzt sind.

Zweckmäßigerweise werden die Aktionskästen von der Poolstation an den Großhändler und/oder unmittelbar an die Verkaufsstätten geliefert, was eine individuelle Ausrichtung entsprechend der Bedürfnisse bestimmter Liefersysteme ermöglicht.

Im Falle beschädigter Kästen ist eine Umrüstung der Kästen auf die gleichen Aktionskästen ohne Weiteres möglich, indem die beschädigten Außenhäute in der Poolstation entfernt und diese nach Aufbringung einer neuen Außenhaut wieder in das System rückgeführt werden.

Die Bereitstellung von einheitlichen Grundkästen, das heißt Grundkösten mit gleichem Aufbau und gleichen Abmessungen, ermöglicht es zudem, die Kästen mit unterschiedlichen Flaschenaufnahmeabteilen auszurüsten und zwar wiederum entsprechend der Bedürfnisse der Getränkehersteller, indem etwa ein bereitgestellter Standardgrundkasten wahlweise mit einem Gefache für 20 Aufnahmeabteile oder 24 Flaschenaufnahmeabteile bestückt wird. Da die Aktionskästen aufgrund ihrer begrenzten Einsatzzeit in der Regel nicht so stabil und aufwendig ausgelegt werden müssen, wie die klassischen Kästen, die individuell für die Brauereien zugeschnitten sind, lassen sich ohne Weiteres auch unterschiedlich Gefache in ein- und denselben Aufnahmekasten integrieren. Dabei ist natürlich zweckmäßig, die Gefache als Einsetzgefache auszuführen, die über Steck- und/oder clipsartige Rastverbindungen in den Kästen befestigt werden können und austauschbar sind. Hierfür eignen sich insbesondere Gefäche mit einem Rahmenwerk. Wenn in diesem Zusammenhang von einheitlichen Grundkästen gesprochen wird, so ist darunter auch zu verstehen, dass innerhalb des Systems auch verschiedene Typen eines einheitlichen Grundkastens bereit gehalten werden können, wobei sich diese Typen im Design und insbesondere in den Abmessungen voneinander unterscheiden können, so dass auch Kästen mit unterschiedlichem Flaschenaufnahmevermögen für derartige Aktionsverkäufe in das System eingeschleust werden können.

Nach Maßgabe der Erfindung können für die Außenhaut Schlauchfolien verwendet werden, die in einfacher Weise von Folienstrümpfen aus Kunststoff abgeschnitten und über die Grundkästen gestülpt werden können. Der Folienstrumpf oder die davon abgetrennten Schlauchfolien können in einfacher Weise bedarfsgerecht entsprechend den Vorstellungen des Getränkeherstellers für die Aktionsware bedruckt werden, sodass die Grundkästen in sehr einfacher Weise für den Aktionsverkauf speziell gerüstet werden können. Deswegen ist es innerhalb des Systems auch zweckmäßig, wenn entsprechende Bedruckungsstationen und Einrichtungen zum Abziehen und Zuschneiden der Folienstrümpfe bedarfsweise integriert werden. Die Befestigung der Schlauchfolien erfolgt in einfacher Weise entweder durch einen Haftverbund in Folge der Eigenspannung der Schlauchfolie, die vor dem Aufsetzen auf den Kasten aufgeweitet und dann in Folge Eigenvorspannung nach dem Aufsetzen auf den Kasten sich wieder zurückzieht und mit Spannung auf dem Kasten sitzt, oder es werden Heißschrumpffolien verwendet, sodass durch Heißschrumpfen ein fester, aber bedarfsweise lösbarer Verbund der Außenhaut auf dem Grundkasten verwirklicht werden kann.

In einer alternativen Ausführungsform wird ein Folienumschlag verwendet, der um die Seitenwand gelegt ist.

Bei diesen Folien ist erfindungsgemäß vorgesehen, diejenigen Bereiche, auf denen die folienartige Außenhaut aufgebracht wird, zu bombardieren, also mit einer Wölbung vorzusehen, wodurch in einfacher Weise ein Faltenwurf insbesondere unter Berücksichtigung eines Heißschrumpfvorganges beseitigt bzw. verhindert werden kann. Die Bombardierung, d.h. Wölbung, kann bedarfsweise zweidimensional oder dreidimensional vorgenommen werden, was in der Regel abhängig von der Größe der Fläche gewählt wird, die von der Außenhaut überspannt werden muss. Die bevorzugt flächige, das heißt im Wesentlichen zweidimensionale Wölbung bzw. Bombardierung kann bis zu 5 mm Wölbungs- bzw. Krümmungstiefe aufweisen. Bevorzugt ist eine Krümmungstiefe, die im Bereich der größten Wölbung im Bereich von 1,5 bis 3 mm liegt. Hierbei kann es zweckmäßig sein, dass lediglich umlaufend der Zwischenabschnitte bzw. mittlerer Abschnitt mit einer Wölbung versehen wird, wobei es bevorzugt ist, wenn die Wölbungen im Eckkantenbereich von einer Fläche auf die andere Fläche tangentenstetig übergehen, so dass keinerlei Kanten oder kantige Eckübergänge entstehen. Vorteilhaft ist insbesondere eine weitgehend glatte Ausführung um Kanten, Rücksprünge, Vertiefungen und dergleichen zu vermeiden, mit Ausnahme der vorbeschriebenen Nuten oder Rillen für das randseitige Eintauchen der Folienränder, um diese vor Beschädigungen zu schützen.

Nach Maßgabe der Erfindung wird somit ein einheitlicher Grundkasten verwendet, der einfach aufgebaut sein kann und zweckmäßigerweise einen Boden und vier Seitenwände aufweist. Ein derart einheitlicher Grundkasten kann dann als Standardkasten für verschiedene Getränkehersteller zum Zwecke von Aktionsverkäufen verwendet werden. Je nach Aktionsverkauf wird der Grundkasten mit einer entsprechenden Außenhaut belegt, die entsprechend den Bedürfnissen des Getränkeherstellers in Bezug auf die Aktionsverkäufe mit herstellerspezifischen Angaben bedruckt sind.

Hierbei kann für die Außenhaut eine Schlauchfolie oder eine Umschlagfolie verwendet werden, welche die Bedruckung für die Aktionsverkäufe enthält. Im Falle von Folien erfolgt eine Festlegung maßgeblich in einfacher Weise durch einen Heißschrumpfvorgang. Um ein Ablösen der Folie während der Handhabung der Aktionskästen zu vermeiden, ist es zweckmäßig, Nuten im Grundkasten vorzusehen, die ein Eintauchen der Ränder der Folie ermöglichen, sodass ein Ablösen der Folie weitgehend verhindert wird. Im Falle von Umreifungsfolien können vornehmlich vertikal ausgerichtete Nuten vorgesehen sein, die auch für das Cutten der überlappenden Folien verwendet werden können. Im Falle der in die Nuten eintauchenden Folien ergibt sich in Folge einer gegebenenfalls hierdurch bedingten Schattierung über die Nuten ein sehr guter und trennscharfer Übergang zwischen Folie und benachbarten Randabschnitten der Seitenwand erreicht werden, so dass ein auch optisch einwandfreier Übergang zwischen Folie und Grundkasten gewährleistet ist. Bei derartigen Aufmachungen ist das Design der Aktionskästen praktisch gleich der Designqualität der üblichen klassischen Kästen. In vorteilhafter Weise wird die Außenhaut maßgeblich auf einen Bereich der Seitenwände des Kastens aufgebracht, der zwischen einem oberen Randbereich und einem unteren bodenseitigen Randbereich liegt und im folgenden als Zwischenabschnitt oder mittlerer Abschnitt bezeichnet wird. Dies hat den Vorteil, dass die Folien nicht in Anpassung an die üblicherweise im oberen Randabschnitt vorgesehenen Öffnungen ausgelegt werden müssen oder in Anpassung an die bodenseitig für derartige Kästen üblicherweise vorgesehenen Stapelvorsprünge und dergleichen.

In einer zweckmäßigen Ausgestaltung kann insbesondere der obere Randbereich der Kästen gegenüber dem mittleren Abschnitt abnehmbar gestaltet sein, was die Möglichkeit bietet, dass auch der obere Randabschnitt individuell an die einzelne Brauerei bzw. Getränkehersteller angepasst werden kann. Bedarfsweise ist dies auch für den unteren Randabschnitt möglich, was aber mehr von sekundärer Bedeutung ist.

Nachfolgend werden bevorzugte Ausführungsbeispiele der Erfindung anhand der Zeichnung beschrieben. Darin zeigen in rein schematischer und im Übrigen rein beispielhafter Weise
- Figur 1: eine Ansicht mehrerer Kastendarstellungen in Seitenansicht und zwar einerseits einen Grundkasten und andererseits als Aktionsflaschenkästen gerüstete Grundkästen
- Figur 2: eine Seitenansicht eines Grundkastens mit Aufrüstung einer Schlauchfolie zur Bildung eines Aktionsflaschenkastens
- Figur 3: eine perspektivische Darstellung zur Aufbringung einer Außenhaut auf den Kasten nach Figur 2
- Figur 4: eine perspektivische Ansicht eines Grundkastens mit dem Umschlag einer folienartigen Außenhaut
- Figur 5: eine Draufsicht auf einen Grundkasten mit leichten bombierten Seitenflächen für das faltenfreie Aufbringen einer Folie, Etiketten und dgl.
- Figur 6: eine wiederum schematisch gehaltene Teilschnittdarstellung eines Kastenteils ohne Außenhaut
- Figur 7: eine Detailansicht des mit Rundkreis eingeschriebenen Bereichs aus Figur 4 mit schematisch angedeuteter Folienhaut
- Figur8: eine perspektivische Ansicht analog der Ausführungsform nach Figur 3 mit einer Vertikalnut
- Figur 9: eine Seitenansicht im Teilschnitt eines Kastens ähnlich der Ausführungsform nach Fig. 6 oder 7
- Figur 10: eine Eckdarstellung eines Kastens mit aufgezogener Folie
- Figur 11: eine Teilansicht des unteren Bereichs eines Grundkastens mit einem darin aufgenommenen Transponder
- Figur 12: ein Blockschaltbild zur Erläuterung eins Poolsystems für die Zirkulierung der anhand der Figuren 1 bis 8 dargestellten Aktionskästen

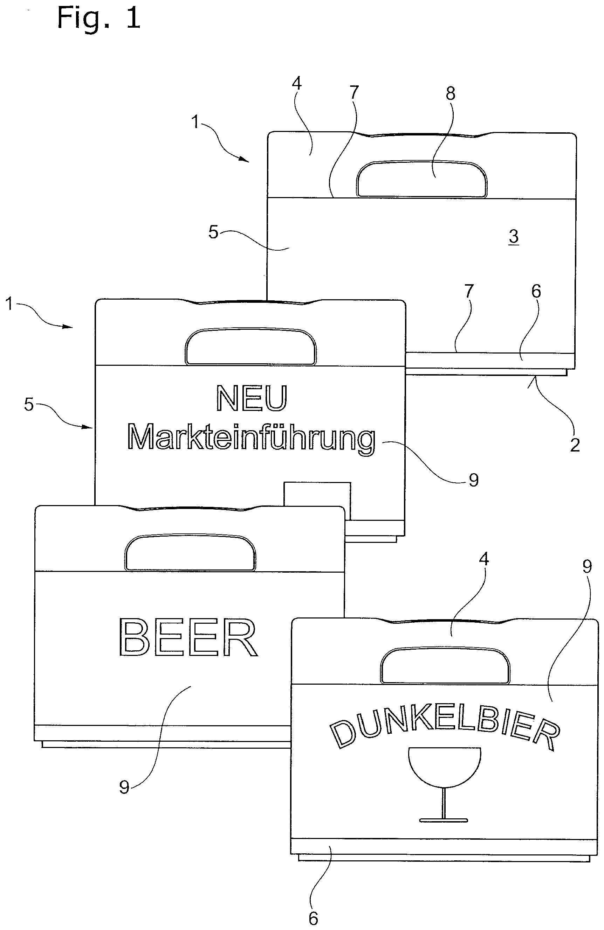

Figur 1 zeigt vier Seitenansichten von Flaschenkästen und zwar oben rechts einen Grundkasten 1 und darunter drei Abbildungen von auf der Basis des Grundkastens gerüsteten Aktionsflaschenkästen, im Folgenden kurz Aktionskästen genannt.

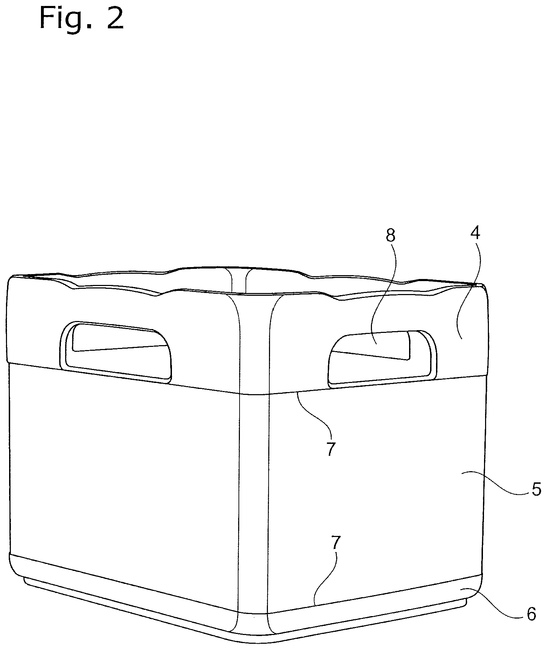

Der in Figur 1 oben und in Fig. 2 dargestellte Grundkasten 1 ist im dargestellten Ausführungsbeispiel einstückig aus Kunststoff durch Spritzgießen hergestellt und umfasst einen Boden 2 und vier umlaufend angeordnete Seitenwände 3. Der Grundkasten 1 ist im dargestellten Ausführungsbeispiel in drei übereinander angeordnete Abschnitte untergliedert, nämlich einem oberen Randabschnitt 4, einem Zwischenabschnitt, auch mittleren Abschnitt 5 genannt, und einem unteren bodenseitigen Randabschnitt 6. Die Unterteilung der Abschnitte ist durch die aus Figur 1 erkennbaren Horizontallinien 7 ersichtlich, wobei die Unterteilung nur zur Illustration dient, also geeignet, bedarfsweise auch ohne den ein oder anderen Abschnitt, vorgenommen werden kann. Der obere Randabschnitt 4 ist umlaufend ausgebildet und zwar einstückig und umfasst Grifföffnungen 8, die auf einer, allen oder aber insbesondere bevorzugt zwei gegenüberliegenden Seiten 3 vorgesehen sind. Diese Grifföffnungen 8 sind nur beispielshalber angegeben. Dieser Grundkasten 1 dient als Grundlage für einen Aktionskasten, der entsprechend brauereispezifischen Kriterien gerüstet ist. Figur 2 zeigt, dass die dort vorzugsweise kastenumlaufenden Linien 7 durch nach innen rückspringende Schultern bzw. Absätze oder Abstufungen gebildet sind, so dass der mittlere Abschnitt 5 gegenüber dem oberen und dem unteren Abschnitt 4 und 6 zurückgesetzt ist, vorzugsweise um mindestens, insbesondere um die Dicke der nachträglich dort aufzubringenden Außenhaut 9, so dass deren Außenfläche vorzugsweise im wesentlichen bündig mit der Außenfläche des oberen Abschnitts 4 und des unteren Abschnitts 7 ist und damit nach außen nicht vorsteht. Zweckmäßigerweise ist die auf dem Abschnitt 5 aufgebrachte Außenhaut gegenüber den Abschnitten 4 und 6 etwas zurückgesetzt.

Wie sich aus den unteren Darstellungen in Figur 1 ergibt, ist im Zwischenabschnitt bzw. mittleren Abschnitt 5 des Grundkastens 1 eine Außenhaut 9 vorgesehen, die auf der Außenfläche der Seitenwand 3 aufgebracht ist und im dargestellten Ausführungsbeispiel durch eine Kunststofffolie gebildet ist, die als Werbeträgerfläche geeignet ausgebildet und mit für den Getränkehersteller mit Blickpunkt auf die Aktionsware bestimmten Bedruckungen und dergleichen versehen ist. Gemäß Figur 1 weist der zweite Kasten von oben beispielsweise eine Bedruckung
"NEU"
Markt-Einführung"
auf und soll somit auf ein neues Getränkeprodukt aufmerksam machen. Die anderen Seiten des Grundkastens können mit entsprechenden Angaben versehen sein, die etwa den Getränkehersteller oder die Art des im Flaschenkasten befindlichen Getränks bezeichnen.

Die in den Ausführungsformen nach Figur 1 dargestellte Außenhaut ist durch eine Kunststofffolie gebildet, die lösbar auf mindestens einer Seitenwand, hier auf vier Seitenwänden angeordnet ist. Figur 2 zeigt wiederum nur rein beispielhaft die Aufbringung und Ausbildung einer solchen Außenhaut 9 zur Rüstung des aus Figur 1 ersichtlichen Grundkastens 1 zum Aktionskasten.

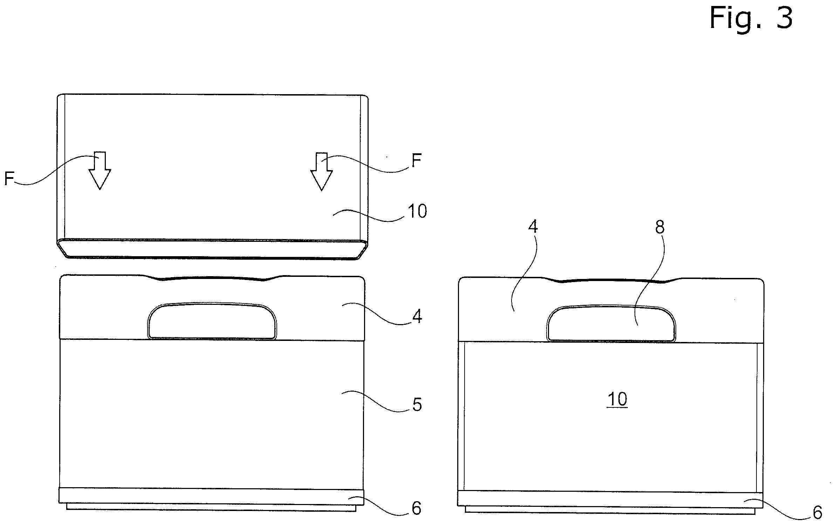

Figur 3 zeigt links wiederum den Grundkasten 1 mit den Abschnitten, nämlich dem oberen Randabschnitt 4, dem mittleren Abschnitt 5 und dem unteren bodenseitigen Randabschnitt 6, wobei die Unterteilung durch gestrichelte Linien 7 dargestellt ist. Zur Umrüstung des Grundkastens wird, wie durch Pfeildarstellung F in Figur 2 angedeutet ist, eine Schlauchfolie 10 aus einem geeigneten Kunststoff, die geeignet auf der Außenfläche als Werbeträgerfläche gerüstet ist und damit insbesondere beliebig bedruckbar ist, von oben her über den Grundkasten 1 gezogen, bzw. aufgesetzt und zwar derart, dass die Schlauchfolie im dargestellten Ausführungsbeispiel mit dem mittleren Abschnitt 5 ausgerichtet ist. Die als oben und unten vorzugsweise offene Rundum-Folie ausgebildete Schlauchfolie 10 überdeckt hierbei nach dem Aufstülpen auf den Grundkasten 1 alle vier Seitenwände 3 im Bereich der mittleren Abschnitte 5, ist also umlaufend ausgebildet und erstreckt sich somit auch über den Eckbereich. Die Schlauchfolie ist hierbei einstückig und kann von einem entsprechenden Folienschlauch oder -strumpf abgezogen werden, wobei dann ein passgerecht auf den mittleren Abschnitt 5 abgetrennter Abschnitt erzeugt und auf den Kasten 1 gesetzt wird. Nach Ausrichtung der Schlauchfolie, bzw. dem Aufsetzen der Schlauchfolie auf dem mittleren Abschnitt 5 des Grundkastens 1 erfolgt zweckmäßig eine Heißschrumpfung der Schlauchfolie, so dass diese straff und stramm sich um den Kasten im Bereich des mittleren Abschnitts 5 legt. Dabei kann auch alleine durch Stretching eine ausreichende Haltekraft gewährleistet werden, wobei sich die Folie wieder einfach für eine weitere Kastenumrüstung abnehmen lässt. Es eignet sich also auch eine Stretchfolie, die gegebenenfalls nicht heiß geschrumpft werden muss. Dadurch ist der Grundkasten 1 als Aktionskasten gerüstet, wobei die Schlauchfolie 10 auf ihrer nach außen gerichteten Werbeträgerfläche herstellerspezifische Angaben des Getränkeherstellers bzw. Brauerei, wie etwa Maibock, Oktoberfest, Frühjahrstrunk und dergleichen mehr enthalten kann. Dadurch kann ohne größeren Aufwand basierend auf einen einheitlichen Grundkasten bzw. Standardgrundkasten ein Aktionskasten individuell entsprechend den Wünschen verschiedener Brauereien bzw. Getränkehersteller werden. Nach Ablauf des Aktionszeitraums kann dann die Außenhaut ohne weiteres vom Grundkasten abgenommen werden, so dass dieser für einen weiteren Aktionsverkauf von Brauereien bzw. Getränkeherstellern zur Verfügung steht. Figur 3 zeigt links, dass die durch eine Folie 10 gebildete Außenhaut 9 mit den Außenflächen der Abschnitte 5 und 6 bündig ist oder demgegenüber leicht zurückgesetzt, insbesondere nicht nach außen vorsteht.

Dies hat den großen Vorteil, dass die Getränkehersteller nicht speziell auf Aktionsverkäufe gerüstete Kästen auf Lager halten müssen, was teuer und platzaufwendig ist, vielmehr basierend auf einem oder mehreren Typen basierenden Grundkasten beliebig viele Brauereien innerhalb eines Pool-Systems einen jeweils einheitlichen Grundkasten für Ihre Aktionsverkäufe oder saisonale Verkäufe bzw. Sonderverkäufe bequem und kostengünstig nutzen können.

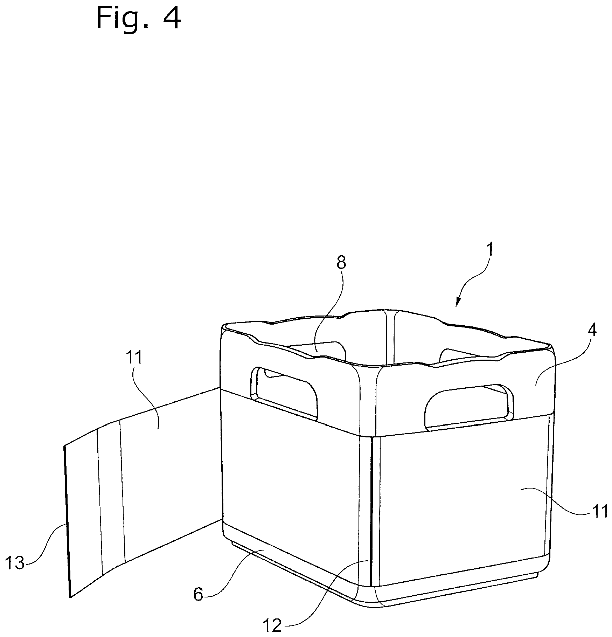

Figur 4 zeigt eine weitere Möglichkeit des Aufbringens einer Außenhaut auf einen Grundkasten 1, wobei vorzugsweise eine heißschrumpfbare Folie 11 verwendet wird, die um die Seitenwände des Grundkastens 1 in Art einer Umreifung geschlagen wird. Die Enden 12 und 13 der aus Figur 3 ersichtlichen Kunststofffolie, die wiederum an der Außenseite geeignet als Werbeträgerfläche ausgebildet ist, können zum Verbund übereinander geschlagen und durch einen Klebeverbund oder aber auch durch Heißschrumpfen miteinander verbunden und damit auch auf dem Grundkasten 1 befestigt werden.

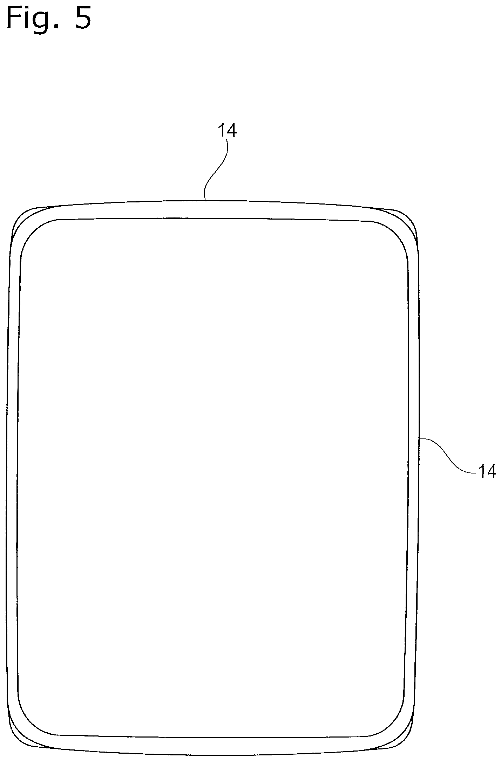

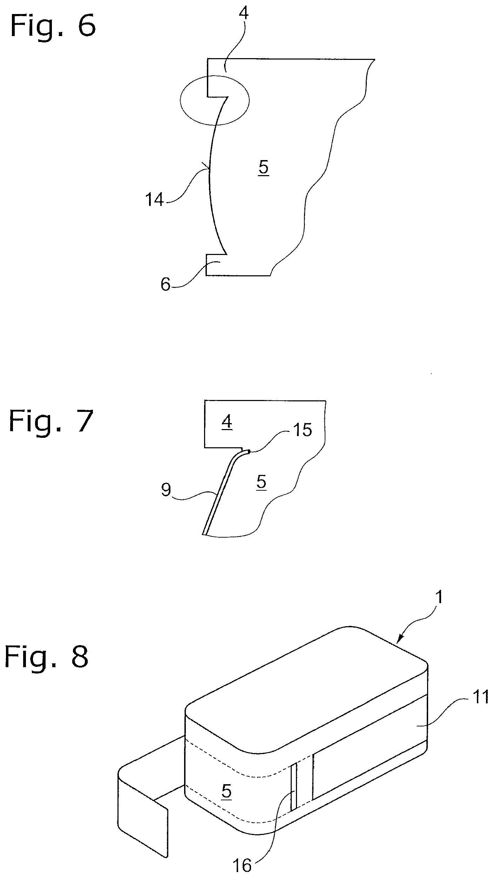

Da bei der Herstellung der in der Regel aus Kunststoff spritzgegossenen Kästen schrumpfungsbedingt Einfallstellen auftreten können, die beim Aufbringen einer Folie zu einer unerwünschten Faltenbildung führen können, ist es im Rahmen der Erfindung bevorzugt, insbesondere den Bereich des Grundkastens 1, auf den die Außenhaut 9 aufgebracht wird, dass wäre im bevorzugten Ausführungsbeispiel der mittlere Abschnitt 5 bzw. Zwischenabschnitt des Grundkastens 1, bombardiert auszubilden, das heißt mit einer Wölbung zu versehen. Entsprechend zeigen Figuren 5 und 6 im Bereich des mittleren Abschnitts 5 eine nach außen gerichtete Wölbung, die mit dem Bezugszeichen 14 gekennzeichnet ist. Diese Wölbung 14 kann geeignet zweidimensional oder dreidimensional vorgesehen sein. Zweidimensional würde bedeuten, dass die Wölbung nur von oben nach unten entsprechend Figur 5 vorgenommen ist. Dreidimensional würde bedeuten, dass die Wölbung nicht nur von oben nach unten sondern auch von links nach rechts in der Seitenansicht des Grundkastens 1 nach Figur 1 für den mittleren Abschnitt 5 vorgenommen wäre. Diese Art der Wölbung kann bedarfsweise vorgenommen werden und ist maßgeblich auch von den Abmessungen des Flaschenkastens abhängig bzw. des mittleren Abschnittes 5. Bei größeren Abmessungen des Zwischenabschnitts 5 kann es zweckmäßig sein, die Wölbung 14 dreidimensional räumlich vorzunehmen, hingegen bei kleineren Flächenbereichen des mittleren Abschnitts 5 würde eine zweidimensionale Auswölbung bzw. Bombardierung bevorzugt sein. Insgesamt und übergeordnet ist es zweckmäßig, all diejenigen Flächen, auf die die Folie bzw. entsprechende Folienabschnitte aufgebracht werden, weitgehend, insbesondere vorzugsweise durchgehend glatt, das heißt ohne stufenartige Vorsprünge, Kanten, Abstufungen, Rippen und dergleichen auszuformen, was die Vermeidung einer Faltenbildung begünstigt. Deswegen ist es auch zweckmäßig, wenn die Wölbung von der einen Seitenfläche auf die andere Seitenfläche tangentenstetig, also ohne eckige Kanten, vielmehr mit entsprechender Rundung übergeht. Ersichtlich lässt sich mit derartigen Folien auch eine einwandfreie durchgehende Bedruckung im Eckbereich der Kästen erreichen, ohne das es hierzu besonderer aufwendiger Maßnahmen bedürfte. Dies ist ein weiterer Vorteil dieser Ausgestaltung. Zugleich wird hierdurch die Folie gegenüber Beschädigungen geschützt.

Durch diese Bombardierung 14 wird erreicht, dass sich beim Heißschrumpfen die Kunststofffolie spannt und damit ein Faltenwurf bzw. eine Faltenbildung weitestgehend vermieden wird. Dies ist für ein ästethisches und einwandfreies Erscheinungsbild eines Aktionskastens durchaus von Bedeutung. Figur 7 zeigt, dass es in den Randbereichen des mittleren Abschnitts 5 zweckmäßig sein kann, eine Nut 15 vorzusehen, die sich im dargestellten Ausführungsbeispiel nach Figur 2 und Figur 3 am oberen und unteren Rand des mittleren Abschnitts 5 vorzugsweise durchgehend erstrecken würde. Die Breite der Nut kann hierbei 1 bis 5 mm, insbesondere 1 bis 3 mm betragen.

Die zur Anordnung auf den Grundkasten 1 straff ausgelegte Schlauchfolie 10 bzw. nach der Ausführungsform der Figur 4 stramm gespannte Umreifungsfolie 11 ist vorzugsweise mit Übermaß zugeschnitten, so dass sich die Randabschnitte der Folie bzw. Außenhaut 9 in die Nut beim Heißschrumpfen aufgrund der dadurch erzeugten Spannung in die Nut einlegen können bzw. bedarfsweise mit einem Werkzeug eingedrückt werden können mit der Folge, dass eine Angriffsfläche für ein Abschälen der auf den Grundkasten 1 zur Bildung des Aktionskastens aufgebrachten Außenhaut 9 ausgeschlossen ist. Wie bereits oben dargelegt, eignen sich insbesondere Heißschrumpf- und /oder Stretchfolien, die transparent oder gefärbt sein können.

Im Falle der Ausführungsform nach Figur 4 mit einer um die Seitenwände des Grundkastens 1 geschlagenen Kunststofffolie kann die Ausbildung einer sich über den mittleren Abschnitt 5 erstreckenden, insbesondere den Abschnitt umlaufende Nut, vorzugsweise auch nur vertikalen Nuten 16 zweckmäßig sein, die sich aus Figur 8 ergibt. Diese Nut dient beim Übereinanderlappen der Enden 12 und 13 der Folie 11 als Schneid- bzw. Cutter-Nut und kann bedarfsweise auch als Einlegenut für die Enden der Folie verwendet werden. Bei entsprechend enger Auslegung der Nut ist dann ein Übergang bzw. ein Nahtbereich zwischen den Enden der Umschlagfolie nicht zu erkennen. Bei den randseitig der Abschnitte vorgesehenen, insbesondere umlaufenden Nuten, kann es zweckmäßig sein, diese unmittelbar in den Übergangsbereich zum oberen Randabschnitt bzw. zum unteren Bodenabschnitt zu legen, so dass die Nuten sozusagen in dem Übergangsbereich versteckt sind. Umlaufend im Sinne einer Schlauchfolie ist hierbei über den Umfang des Kastens umlaufend zu verstehen, wobei bei abschnittsweise vorgesehenen Folien umlaufend sich jeweils auf den Abschnitt zweckmäßigerweise bezieht.

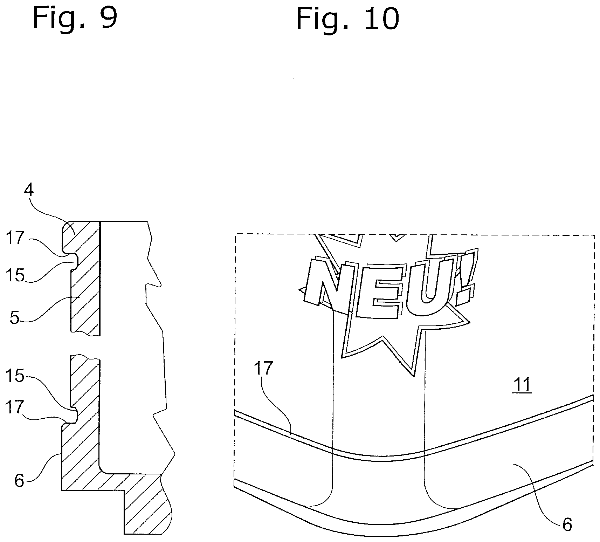

Figur 9 zeigt ähnlich der Ausführungsform nach Fig. 6, 7 eine Teilansicht einer Seitenwand, wobei der mittlere Abschnitt 5 leicht nach innen versetzt ist, so dass eine dort aufzunehmende Außenhaut nach außen hin nicht über die Außenfläche der oberen Abschnitte 4 und 6 vorspringt und damit geschützt ist. Deutlich sind aus Fig. 9 die bereits in Fig. 7 dargestellten Nuten im Übergangsbereich zwischen dem mittleren Abschnitt und den beiden anderen Abschnitten 4 und 6 dargestellt, die für das Einzwicken bzw. Eingreifen einer folienartigen Außenhaut 9 dienen und dabei auch Schattenfugen bilden können. In diesem Ausführungsbeispiel ist der mittlere Abschnitt 5 nach außen bombardiert bombardiert sein.

Beim Schrumpfen einer Schrumpffolie ziehen sich die Ränder der Schrumpffolie in die Nuten 15 ein, so dass ein unabsichtliches Lösen der Folie vom Grundkasten her nicht ohne weiteres möglich ist.

Figur 10 zeigt den Folienumschlag im Eckbereich, wobei Faltenfreiheit auch im Eckbereich gewährleistet ist, maßgeblich auch bedingt durch die gerundete Eckkante des Eckbereichs. Dadurch ist auch eine über den Eckbereich geführte Bedruckung ohne Nahtstellen möglich.

Aus Figur 10 ist die Folie 11 ersichtlich, die im mittleren Bereich 5 des Grundkastens angeordnet ist. Als Dekorschutz ist eine bereits oben angesprochene Nut oder eine Auswölbung 17 bzw. Schulter bzw. Stufe angebracht, wobei infolge der Schulter 17 der mittlere Abschnitt 5 nach innen gerückt ist.

Die in den Figuren 1 bis 9 beschriebenen Grundkästen sind bevorzugt einstückig aus Kunststoff durch Spritzgießen hergestellt, jedoch ist es im Rahmen der Erfindung auch möglich, beispielsweise den oberen und/ oder unteren Randabschnitt 4 bzw. 6 separierbar vom mittleren Abschnitt zu machen. Beispielsweise könnte der obere Rahmenabschnitt über eine steck- bzw. clipsartige Rastverbindung mit dem mittleren Abschnitt verbindbar sein, so dass auch eine brauereispezifische Gestaltung des Grundkastens in Bezug auf den oberen und/ oder unteren Randabschnitt ohne weiteres möglich ist. Dadurch können in weitergehender Weise spezielle Designvorstellungen der Brauereien berücksichtigt werden.

Unabhängig von den beschriebenen Folienumspannungen ist es natürlich auch möglich, die Folien nicht nur im mittleren Bereich sondern komplett über die gesamte Seitenwand vorzusehen.

Alternativ ist es aber auch möglich, die Seitenwände mit entsprechend flächigen Inmould Labels zu versehen, deren Oberfläche mit einer entsprechenden Haftschicht versehen bzw. derart behandelt ist, so dass bedarfsweise die Etiketten für die Gestaltung von Aktionskästen auf den Labels durch reine Adhäsion und /oder Kleber befestigt werden können. Nach Ablauf der Aktionsverkäufe können die Etiketten dann wieder abgenommen werden, etwa in dem Sie über spezielle Reinigungsmittel befeuchtet werden und dann abgezogen werden können. Dies kann durch Eintauchen in ein Reinigungsbad erfolgen.

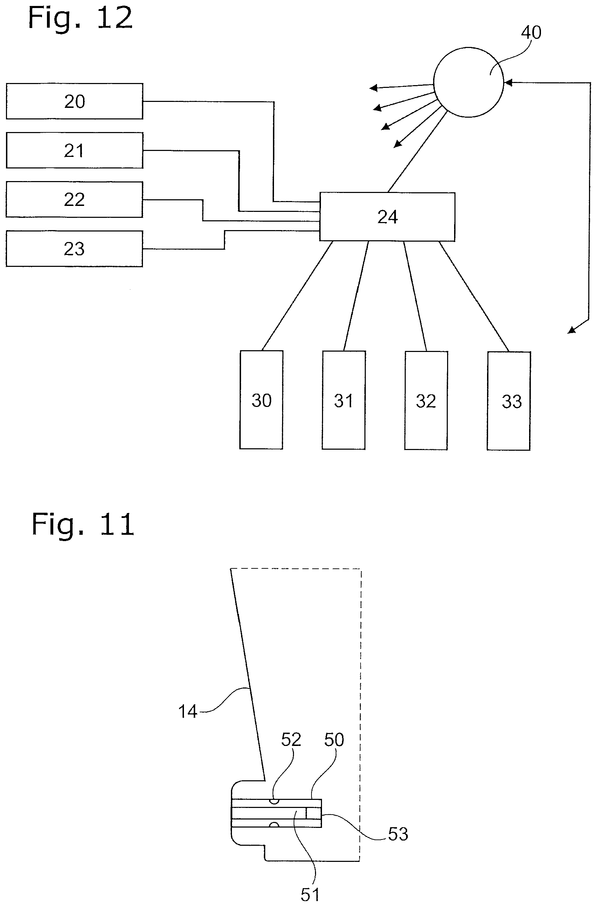

Figur 11 zeigt wiederum in rein schematischer Darstellung eine Teilansicht des unteren Bereichs eines Grundkastens mit einer im unteren Randabschnitt 6 aufgenommenen Nut 50, die im dargestellten Ausführungsbeispiel in Art eines langgestreckten Schlitzes vorliegt und in der ein Transponder 51 eingesteckt und darin insbesondere durch eine Schnappverbindung, hier in Form von vorstehenden Wülsten oder Rippen 52 gehalten ist. Wie aus Figur 11 hervorgeht kann der Transponder mit einer Zeitschalkomponente 53 gekoppelt sein. Dadurch ergibt sich ein Trackingsystem, mit dem innerhalb des Systems der Umlaufweg der Grundkästen bzw. der Aktionskästen nachgeführt und aufgezeichnet werden kann. Durch die Eingliederung einer Zeitschaltkomponente wird dann auch innerhalb des Poolsystems automatisch registriert wann der Aktionsverkauf beendet wird, so dass in einfacher Weise der Kasten wieder für die Bereitstellung für einen weiteren Aktionsverkauf durch Abnahme der Außenhaut gerüstet werden kann.

Die anhand der Figuren 1 bis 11 rein beispielhaft erläuterten Ausführungsformen der Erfindung zeigen Aktionskästen, die im Rahmen eines Poolsystems verwendet werden können, das im Folgenden anhand der Figur 12 beschrieben wird. Figur 12 zeigt hierbei ein Blockschaltbild der Liefer- und Rückführvorgänge, wie sie üblicherweise im Getränkehandel stattfinden.

In Figur 10 sind hierbei mit 20, 21, 22 und 23 verschiedene Brauereien bzw. Getränkehersteller bezeichnet, die ihre Produkte mit speziell entsprechend den Wünschen der Brauerei gestalteten Flaschenkästen einem Großhändler 24 zuliefern, der dann über entsprechende LKW's diverse Verkaufsstätten, etwa Supermärkte, Getränkeläden, Einzelhandel und dergleichen beliefert, wobei die Verkaufsstätte mit 30 bis 33 bezeichnet sind.

Entsprechend erfolgt auch die Rückführung von Leergut, also leeren bzw. mit Leerflaschen gefüllten Flaschenkästen, die von den Verkaufsstätten 30 bis 23 zum Großhändler 24, von dem hier nur einer dargestellt ist, rückgeführt, dort gesammelt, gewaschen, und sortiert und dann entsprechend der Herkunft der Flaschenkästen dann zu den einzelnen Getränkeherstellern bzw. Brauereien 20 bis 23 rückgeführt werden, wo dann eine neue Befüllung der Flaschenkästen einschließlich einer folgenden Auslieferung an den Großhändler und dergleichen stattfindet.

Im Rahmen der Erfindung wird ein Poolsystem durch Integration einer Poolstation 40 in das in sich geschlossene Liefer- und Rückführsystem zwischen den Brauereien, den Großhändlern und den Verkaufsstätten integriert, die dazu dient, einheitlich gestaltete Grundkästen, wie Sie anhand der Figuren 1 bis 9 erläutert und beschrieben worden sind als Standardkästen für Aktionsverkäufe verschiedener Brauereien zu verwenden. Diese haben hierbei nicht das ureigene Design der brauereispezifischer Flaschenkästen, die für die Normalware von den Getränkeherstellern 20 bis 23 zu den Großhändlern 24 und von dort zu den einzelnen Verkaufsstätten transportiert werden. Vielmehr werden die einheitlichen Grundkästen, die nicht auf eine spezielle Brauerei von Ihrem Design her ausgelegt sind, für alle im Poolsystem beteiligte Getränkehersteller 20 bis 23 verwendet und zwar als einheitlicher Standardkasten in gleicher Aufmachung, wobei bedarfsweise auch Standardkästen in unterschiedlicher Größe bzw. Aufnahmekapazität verwendet werden können, um eine entsprechende Flexibilität zu ermöglichen, etwa teilbare Kästen.

In der Poolstation 40 stehen die Grundkästen für Aktions- bzw. saisonale Verkäufe durch die Brauereien 20 bis 23 bereit und können bedarfsweise für entsprechende Aktionsverkäufe verwendet werden. Wenn beispielsweise der Getränkehersteller 20 beabsichtigt, über einen Zeitraum von vier Wochen Bock-Biere mit einem speziellen Alkoholgehalt in einer bestimmten Jahreszeit, hier im Monat Mai, zu verkaufen, dann ordert er in der Poolstation 40 beispielsweise 200.000 Grundkästen, die nach seinen Bedürfnissen mit einer entsprechend mit herstellerspezifischen Angaben versehenen Außenhaut für die Anpreisung des Bock-Bieres versehen werden. Die Poolstation 40 liefert dann die entsprechend gerüsteten Aktionskästen an die Brauerei 20, die diese Aktionskästen mit dem beworbenen Produkt, hier Maibock-Bier befüllt, und diese mit Maibock-Bieren gefüllten Aktionskästen entsprechend des Liefersystems zu einem Großhändler 24 liefert, durch den schließlich die Verkaufsstätten wunschgemäß und bedarfsgemäß mit diesen Aktionskästen beliefert werden. Die Rückführung der Leerkästen erfolgt bedarfsweise durch die Poolstation 40 oder wiederum über den Großhändler 24 in der gewohnten Weise zur speziellen Brauerei 20. Für den Fall, dass in Bezug auf die Außenhaut beschädigte Aktionskästen zum Großhändler 24 rückgeführt werden, werden die beschädigten Kästen aussortiert und dann unmittelbar der Poolstation 40 zugeführt, wo die beschädigten Kästen mit einer neuen Außenhaut entsprechend den Bedürfnissen der Brauerei 20, hier mit Maibock-Bierankündigung, versehen und wieder in den Betriebszyklus eingeschleust werden. Für den Fall, dass die Aktion nach Ablauf von vier Wochen beendet wird, erfolgt die Rückführung der Aktionskästen entweder über den Großhändler 24 oder von den Verkaufsstätten unmittelbar zur Poolstation 40, wo die Außenhäute bzw. die Folien beseitigt werden, so dass die Grundkästen in der Poolstation wiederum für eine andere Verkaufsaktion mit anderen Außenhäuten bereit stehen.

Selbstverständlich funktioniert das Poolsystem auch in anderer Weise, etwa wenn Brauereien direkt die Verkaufsstätten beliefern, da dann die Poolstation 40 für die Aktionsware zwischengeschaltet werden kann.

## Patentansprüche

1. Flaschenkasten, der für die Verwendung in Aktionskäufen mit abnehmbaren Werbemittelträgerflächen ausgebildet ist, wobei
der Flaschenkasten aus einem Grundkasten (1) mit einem Boden (2) und vier Seitenwänden (3) gebildet ist, der mindestens an einer Seitenwand (3) mit einer als Werbemittelträger ausgebildeten separaten Außenhaut (9) versehen ist, die durch eine Schlauchfolie (10) gebildet ist, die auf den Grundkasten (1) unter zumindest teilweiser Abdeckung der Seitenwände (3) des Kasten (1) aufsetzbar ist, oder durch einen Folienumschlag (11), der um die Seitenwände (3) des Grundkastens (1) gelegt ist und die zur Bildung eines Aktionsflaschenkastens mit herstellerspezifischen Angaben für einen Getränkehersteller abnehmbar am Grundkasten (1) angeordnet ist, wobei der Grundkasten (1) einen oberen Randabschnitt (4), einen unteren bodenseitigen Randabschnitt (6) und einen zwischen dem oberen und unteren Randabschnitt angeordneten (mittleren) Abschnitt (5) aufweist, auf dem die Außenhaut (9) anordbar ist,
**dadurch gekennzeichnet, dass**
der mittlere Abschnitt (5) nach außen hin zumindest an der die Außenhaut (9) aufnehmenden Seitenwand (3) bombardiert ist und dass die Bombardierung zwei- oder dreidimensional ausgebildet ist.

2. Flaschenkasten nach Anspruch 1,
**dadurch gekennzeichnet, dass**
die Folie durch Heißschrumpfen, Haftverbund, Spannung, Formschluss und/ oder durch einen lösbaren Kleber auf dem Grundkasten (1) befestigt ist.

3. Flaschenkasten nach Anspruch 1 oder 2,
**dadurch gekennzeichnet, dass**
der mittlere Abschnitt (5) an allen vier Seitenwänden (3) bombardiert ist.

4. Flaschenkasten nach einem der vorhergehenden Ansprüche,
**dadurch gekennzeichnet, dass**
die Bombardierung eine Wölbungshöhe von maximal 3 mm, vorzugsweise maximal 2 mm, insbesondere bevorzugt maximal 1,5 mm aufweist.

5. Flaschenkasten nach einem der Ansprüche 1 bis 4,
**dadurch gekennzeichnet, dass**
die Folienenden in Nuten (15) des Grundkastens (1) aufgenommen sind.

6. Flaschenkasten nach Anspruch 5,
**dadurch gekennzeichnet, dass**
die Nuten (15) kastenumlaufend im Grundkasten (1) ausgebildet und benachbart oder im Bereich des unteren und oberen Randabschnittes (4, 6) angeordnet sind.

7. Flaschenkasten nach einem der Ansprüche 1 bis 6,
**dadurch gekennzeichnet, dass**
im mittleren Abschnitt (5) eine sich zumindest über dessen Höhe erstreckende, vorzugsweise senkrecht zum Boden (2) verlaufende Cutternut (16) angeordnet ist.

8. Flaschenkasten nach einem der Ansprüche 1 bis 7,
**dadurch gekennzeichnet, dass**
der Grundkasten (1) vorzugsweise am oberen oder unteren Randabschnitt (4, 6) mit einem in einer Ausnehmung untergebrachten RFID-Komponente, insbesondere einem Transponder bestückt ist, wobei vorzugsweise die Komponente, bzw. der Transponder mit einer Zeitschaltkomponente bestückt ist.

9. Verfahren zur Verwendung eines Flaschenkastens, der mit den Merkmalen einer oder mehrerer der Ansprüche 1 bis 8 gerüstet ist, zur Lieferung von Getränkekästen zu Verkaufsstätten (30 bis 33) sowie zu deren Rückführung, bei welchem innerhalb eines Systems Flaschenkästen von Getränkeherstellern an vorzugsweise zumindest einem Großhändler (24) geliefert und von diesem an diverse Verkaufsstätten (30 bis 33) verteilt und die Leerflaschenkästen zum Großhändler (24) rückgeführt, dort gesammelt, gereinigt, sortiert und zu den diversen Getränkeherstellern zum Zwecke der Neubefüllung rückgeführt werden, wobei die Kästen mit einer abnehmbaren Werbemittelträgerfläche ausgebildet werden, die mit herstellerspezifischen Angaben für den Aktionsverkauf versehen werden kann, **dadurch gekennzeichnet, dass** in dieses Lieferund Rückführsystem eine Poolstation (40) integriert wird, in welcher einheitliche Grundkästen (1) als Halbzeug verwendet und zum Zwecke der Lieferung von Aktionsware jeweils mit einer folienartigen Außenhaut (9) mit herstellerspezifischen Angaben zur Bildung von Aktionsflaschenkästen bestückt und danach in das System zur Belieferung der Verkaufsstätten mit den Aktionskästen eingeschleust werden, wobei in der Poolstation (40) die Grundkästen (1) zur Bildung der Außenhaut (9) jeweils mit einer Schlauchfolie (10) bestückt werden, die über den Grundkasten gezogen wird, oder mit einer Folie (11) im Bereich der Kastenseitenwände umreift werden, wobei die Außenhaut (9) auf diejenigen Bereiche aufgebracht wird, die mit einer Bombardierung versehen sind.

10. Verfahren nach Anspruch 9,
**dadurch gekennzeichnet, dass**
die Aktionskästen nach Beendigung des Aktionsverkaufs zur Poolstation (40) rückgeführt und für einen neuen Aktionsverkauf bereitgestellt werden, wobei von den nach Beendigung des Aktionsverkaufs zur Poolstation (40) rückgeführten Aktionskästen die Außenhaut (9) abgenommen und die von der Außenhaut (9) befreiten Grundkästen (1) für einen neuen Aktionsverkauf mit einer entsprechenden Außenhaut (9) zumindest auf den bombardierten Bereichen bestückt und erneut in das System eingeschleust werden.

11. Verfahren nach Anspruch 9,
**dadurch gekennzeichnet, dass**
die Folien (10, 11) durch Heißschrumpfung auf dem Grundkasten (1) befestigt werden.

## Claims

1. A bottle crate which is configured for the use in promotional sales with detachable surfaces for advertising media, with
the bottle crate being configured of a basic crate (1) with a bottom (2) and four side walls (3), the crate being equipped at least at one side wall (3) with a separate outer skin (9) configured as an advertising media, the skin being formed by a tubular foil (10) which is attachable to the basic crate (1) by at least partially covering the side walls (3) of the crate (1), or formed by a foil envelope (11) which is put around the side walls (3) of the basic crate (1) and which is arranged detachably at the basic crate (1) for forming a promotional bottle crate with manufacturer-specific information for a producer of beverages, with the basic crate (1) having an upper edge section (4), a lower edge section (6) at the bottom side and a (middle) section (5) which is arranged between the upper and lower edge section, onto which the outer skin (9) can be arranged,
**characterized in that**
the middle section (5) is bombarded towards the outside at least at the side wall (3) which includes the outer skin (9) and that the bombardment is configured two or three dimensionally.

2. The bottle crate according to claim 1,
**characterized in that**
the foil is attached onto the basic crate (1) by heat shrinking, adhesive bond, tension, form locking and/or by a solvable glue.

3. The bottle crate according to claim 1 or 2,
**characterized in that**
the middle section (5) is bombarded at all four side walls (3).

4. The bottle crate according to one of the preceding claims
**characterized in that**
the bombardment has a curvature height of a maximum of 3 mm, preferably a maximum of 2 mm, particularly preferred a maximum of 1.5 mm.

5. The bottle crate according to one of the claims 1 to 4,
**characterized in that**
the foil ends are received in grooves (15) of the basic crate (1).

6. The bottle crate according to claim 5,
**characterized in that**
the grooves (15) are configured circumferentially with respect to the crate in the basic crate (1) and are arranged adjacent to or in the area of the lower and upper edge section (4, 6).

7. The bottle crate according to one of the claims 1 to 6,
**characterized in that**
in the middle section (5), a cutter groove (16) is arranged which extends over at least the height of the section, preferably transverse to the bottom (2).

8. The bottle crate according to one of the claims 1 to 7,
**characterized in that**
the basic crate (1) is equipped preferably at the upper or lower edge section (4, 6) with an RFID component which is housed in a recess, particularly with a transponder, the component or transponder, respectively, preferably being equipped with a time switch component.

9. A method for using a bottle crate with the features of one or more of claims 1 to 8, for delivering bottle crates to salesrooms (30 to 33) as well as for their return, with which method, within a system, bottle crates of beverage producers are delivered preferably to at least one wholesaler (24) who distributes the crates to various salesrooms (30 to 33) and empty bottle crates are returned to the wholesaler (24), are collected there, cleaned, sorted and returned to the various beverage producers for the purpose of refilling, the crates being configured with a detachable surface for advertising means which can be provided with manufacturer-specific information for the promotional sale, **characterized in that** a pooling station (40) is integrated into this delivery and return system, in which station uniform basic crates (1) are used as a semi-finished product and are, for the purpose of delivering promotional goods, respectively equipped with a foil-like outer skin (9) with manufacturer-specific information for generating promotional bottle crates and are then brought into the system for supplying the salesrooms with the promotional crates, whereby in the pooling station (40), the basic crates (1) are equipped with a tubular foil (10) each which is pulled over the basic crate for forming the outer skin (9), or are strapped with a foil (11) in the area of the crate side walls, with the outer skin being applied onto those regions which are provided with a bombardment.

10. The method according to claim 9,
**characterized in that**
the promotional crates are returned to the pooling station (40) after termination of the promotional sale and are made available for a new promotional sale, the outer skin (9) being removed from the promotional crates which are returned to the pooling station (40) after termination of the promotional sale, and the basic crates which are freed from the outer skin (9) are equipped with a respective outer skin (9) at least at the bombarded areas for a new promotional sale and are reintroduced into the system.

11. The method according to claim 9,
**characterized in that**
the foils (10, 11) are attached to the basic crate (1) by heat shrinking.

## Revendications

1. Caisse à bouteilles qui, pour être utilisée dans des actions promotionnelles, est réalisée avec des surfaces de support publicitaire amovible, dans laquelle
la caisse à bouteilles est formée à partir d'une caisse de base (1) comportant un fond (2) et quatre parois latérales (3), qui est munie sur au moins une paroi latérale (3) d'une peau extérieure (9) séparée, réalisée comme support publicitaire, qui est formée par une feuille en gaine (10) qui peut être posée sur la caisse de base (1) en recouvrant au moins partiellement les parois latérales (3) de la caisse (1), ou par une enveloppe en feuille (11) qui est posée autour des parois latérales (3) de la caisse de base (1) et qui est disposée de manière amovible sur la caisse de base (1) pour former une caisse à bouteilles promotionnelle avec des indications spécifiques au fabricant pour un fabricant de boissons, dans laquelle la caisse de base (1) présente une section de bord supérieur (4), une section de bord inférieur (6) côté fond et une section (5) (centrale) disposée entre la section de bord supérieur et la section de bord inférieur, sur laquelle la peau extérieure (9) peut être disposée,
**caractérisée en ce que**
la section centrale (5) est bombée vers l'extérieur au moins sur la paroi latérale (3) logeant la peau extérieure (9) et **en ce que** le bombement est réalisé de manière bidimensionnelle ou tridimensionnelle.

2. Caisse à bouteilles selon la revendication 1,
**caractérisée en ce que**
la feuille est fixée sur la caisse de base (1) par thermorétraction, par joint adhésif, par tension, par adhérence de forme et/ou au moyen d'une colle amovible.

3. Caisse à bouteilles selon la revendication 1 ou 2,
**caractérisée en ce que**
la section centrale (5) est bombée sur toutes les quatre parois latérales (3).

4. Caisse à bouteilles selon l'une quelconque des revendications précédentes,
**caractérisée en ce que**
le bombement présente une hauteur de bombement de maximum 3 mm, de préférence de maximum 2 mm, notamment de manière préférée de maximum 1,5 mm.

5. Caisse à bouteilles selon l'une quelconque des revendications 1 à 4,
**caractérisée en ce que**
les extrémités de la feuille sont logées dans des rainures (15) de la caisse de base (1).

6. Caisse à bouteilles selon la revendication 5,
**caractérisée en ce que**
les rainures (15) sont réalisées dans la caisse de base (1) sur la périphérie de la caisse et sont disposées de manière avoisinante à la section de bord inférieur et à la section de bord supérieur ou au niveau de la section de bord inférieur et de la section de bord supérieur (4, 6).

7. Caisse à bouteilles selon l'une quelconque des revendications 1 à 6,
**caractérisée en ce que**
dans la section centrale (5) est disposée une rainure de coupe (16) s'étendant au moins sur la hauteur de la section centrale, de préférence perpendiculairement au fond (2).

8. Caisse à bouteilles selon l'une quelconque des revendications 1 à 7,
**caractérisée en ce que**
la caisse de base (1) est équipée de préférence sur la section de bord supérieur ou sur la section de bord inférieur (4, 6) d'un composant RFID placé dans un évidement, notamment d'un transpondeur, le composant ou le transpondeur étant équipé d'un composant à minuterie.

9. Procédé d'utilisation d'une caisse à bouteilles qui est équipée des caractéristiques de l'une ou de plusieurs des revendications 1 à 8, pour la livraison de caisses à bouteilles à des points de vente (30 bis 33) ainsi qu'à leur retour, dans lequel des caisses à bouteilles de fabricants de boissons, dans un système, sont livrées de préférence à au moins un grossiste (24) et distribuées par ce dernier à divers points de vente (30 bis 33), et dans lequel les caisses à bouteilles vides sont ramenées au grossiste (24), y sont collectées, nettoyées, triées et ramenées aux divers fabricants de boissons dans le but d'être de nouveau remplies, dans lequel les caisses sont réalisées avec une surface de support publicitaire amovible, qui peut être munie d'indications spécifiques au fabricant pour la vente promotionnelle, **caractérisé en ce qu'**une pool station (40) est intégrée dans ce système de livraison et de retour, dans laquelle des caisses de base (1) uniformes sont utilisées en tant que produit semi-fini et, dans le but de la livraison de marchandise promotionnelle, sont respectivement équipées d'une peau extérieure (9) à la manière d'une feuille, avec des indications spécifiques au fabricant pour former des caisses à bouteilles promotionnelles, et sont ensuite transportées dans le système de livraison des points de vente avec les caisses promotionnelles, dans lequel les caisses de base (1), dans la pool station (40), sont, pour la formation de la peau extérieure (9), respectivement équipées d'une feuille en gaine (10) qui est étirée sur la caisse de base, ou sont encerclées d'une feuille (11) au niveau des parois latérales de la caisse, dans lequel la peau extérieure (9) est placée sur les parties munies d'un bombement.

10. Procédé selon la revendication 9,
**caractérisé en ce que** les caisses promotionnelles, une fois l'action promotionnelle achevée, sont ramenées à la pool station (40) et sont préparées pour une nouvelle vente promotionnelle, dans lequel la peau extérieure (9) est retirée des caisses promotionnelles ramenées à la pool station (40) une fois la vente promotionnelle achevée, et dans lequel les caisses de base (1) libérées de la peau extérieure (9) sont équipées d'une peau extérieure (9) correspondante pour une nouvelle vente promotionnelle, au moins sur les parties bombées, et sont de nouveau transportées dans le système.

11. Procédé selon la revendication 9,
**caractérisé en ce que** les feuilles (10, 11) sont fixées sur la caisse de base (1) par thermorétraction.
